(19) Europäisches Patentamt

European Patent Office

Office européen des brevets

(11) **EP 1 701 181 A1**

(12) **EUROPÄISCHE PATENTANMELDUNG**

(43) Veröffentlichungstag:
**13.09.2006 Patentblatt 2006/37**

(51) Int Cl.:
*G02B 5/10* (2006.01)   *G02B 5/09* (2006.01)
*G02B 26/06* (2006.01)

(21) Anmeldenummer: **06004678.6**

(22) Anmeldetag: **07.03.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **08.03.2005   DE 102005011045**

(71) Anmelder: **Systektum GmbH**
**24941 Flensburg (DE)**

(72) Erfinder:
• **Rutz, Frank**
**38104 Braunschweig (DE)**

• **Koch, Martin, Prof. Dr.**
**38104 Braunschweig (DE)**
• **Petukhov, Vladimir**
**38106 Braunschweig (DE)**
• **Kleine-Ostmann, Thomas**
**38118 Braunschweig (DE)**
• **Salhi, Mohammed**
**38106 Braunschweig (DE)**
• **Metz, Carsten, Dr.**
**Chatham, New Yersey 07928 (US)**

(74) Vertreter: **Biehl, Christian et al**
**Boehmert & Boehmert,**
**Anwaltssozietät,**
**Niemannsweg 133**
**24105 Kiel (DE)**

(54) **Rotierenden Reflektor für eine Verzögerungsstrecke für optische Signale**

(57)   Verzögerungsstrecke für optische Signale mit Auskoppelspiegeln und einer rotierenden gekrümmten Spiegelfläche, die einer Spiralkrümmung folgend an einer durch die Drehung sich ändernden Azimutposition den Laserstrahl reflektiert, wobei die Außenseite eines rotierenden Spiegelkörpers wenigstens zwei Spiegelflächen bietet, wobei die Teilflächen symmetrisch zu einem Mittelpunkt angeordnet sind, der Schwer- und Drehpunkt des Reflektors ist und jede Teilfläche mit einem sich ändernden Radius beginnend bei einem Minimalradius und maximal einen Maximalradius erreichend versehen ist.

*Fig. 4*

EP 1 701 181 A1

**Beschreibung**

Die Erfindung betrifft eine Verzögerungsstrecke. In der Technik werden viele Verzögerungsstrecken, insbesondere bei optischen Materialuntersuchungen genutzt.

Ein Beispiel dafür sind optische Anregungs-Abfrage-Experimente, wie z.B. das Vierwellenmischens (VWM). Dabei treffen zwei kohärente Laserpulse mit Wellenvektoren $K_1$ und $K_2$ zeitverzögert zu einer bestimmten Zeit t=0 und t = τ auf die zu untersuchende Probe. Der erste der Laserimpulse generiert eine kohärente makroskopische Polarisation $P^{(1)}(t)$ im Probenmaterial, welche für homogenverbreiterte Übergänge mit einer materialcharakteristischen Zeitkonstante, der Phasenkohärenz - oder Dephasierungszeit T abklingt. Das elektrische Feld des zweiten zeitverzögerten Anregungsimpulses wirkt zweifach: In einem Schritt interferiert es mit der durch den ersten Puls bedingten Polarisation und erzeugt eine reale Population von (im Falle eines Halbleiters) freien oder gebundenen Elektron-Lochpaaren. In einem zweiten Schritt generiert der verzögerte Puls durch nichtlinearoptische Wechselwirkung eine kohärente Polarisation dritter Ordnung $P^{(3)}(t,r)$, die als Quelle für ein in die phasenangepasste Richtung $2k_2-k_1$ abgestrahltes VWM-Signal wirkt.

Dieses VWM-Signal kann zeitintegriert in einem langsamen Fotodetektor vermessen werden, wobei eine zusätzliche zeitliche oder spektrale Auflösung des kohärenten Signals mit Hilfe einer Kreuzkorrelationstechnik bzw. eines Monochromators detailliertere Informationen über die ablaufenden mikroskopischen Prozesse liefern kann.

Ein zeitaufgelöstes Vierwellenmischen ist beispielsweise auf Seite 10 der Dissertation des Erfinders Professor Dr. Martin Koch, Quantenschwebungs-Spektroskopie an exzitonischen Übergängen in Halbleiter-Heterostrukturen, Göttingen, 1995, Cuvillier Verlag, ISBN 3-89588-208-9 zu finden. Im Allgemeinen werden komplizierte experimentelle Aufbauten benötigt, wie diese beispielsweise auf Seite 16 dieser Dissertation beschrieben sind, bei denen die ultrakurzen Lichtimpulse erzeugt werden, die eine Subpikosekunden-Zeitauflösung erreichen. Dabei werden meist Schrittmotorgesteuerte optische Verzögerungsstrecken genutzt (Seite 19 oben aao), die jedoch Probleme hinsichtlich der Reproduzierbarkeit der Ergebnisse und der Schnelligkeit der Wiederholung bringen.

Optische Verzögerungsstrecken werden vielfach genutzt, um die zeitlichen Positionen von ultraschnellen Laserimpulsen im Verhältnis zueinander zu steuern. Beispiele für Experimente, die optische Verzögerungsstrecken umfassen alle Arten von Pumpe-Probenexperimente, optische Tomographie, interferometrische Messung und Terahertz-Spektroskopie in der Zeitdomäne. Die bekanntesten optischen Verzögerungsstrecken sind Schrittmotoren und "Zitterspiegel". Ein Spiegel wird bei diesen entlang einer linearen Verschiebeeinheit bewegt. Der Antrieb erfolgt meist mittels eines Schrittmotors oder eines periodischen Schwingers. Dieser wird in der Praxis durch eine Lautsprecher-ähnliche Membran realisiert, die den daran montierten Spiegel sinusförmig vor und zurückbewegt. Insbesondere für bildgebende Verfahren, wie z. B. Terahertz-Spektroskopie ist eine sehr schnelle Oszillisationsfrequenz notwendig.

Jedoch wird durch die sinusförmige Hin- und Zurückbewegung erhebliche Zeit benötigt, die da die Massen, die bewegt werden müssen keineswegs zu vernachlässigen sind. weiter besteht der Nachteil, daß dies energie- und geräuschintensiv ist. Zudem wird eine nicht-lineare Zeitachse in geringer Genauigkeit und einer beträchtlichen "Todzeit" nicht zu vermeiden sein, da nur nahe-lineare Bruchteile der Bewegung von praktischem Nutzen sind. Die Abtastrate ist auf einige Hertz begrenzt.

Weiter ist eine Arbeit von Jingzhou Xu und X.-C. Zhang zu nennen, "Circular involute stage", Opt.Lett., 29, pp. 2082-2084 (2004), in der zu einem vergleichbaren Zweck eine Spiegelanordnung beschrieben ist, in der zwei Spiegel, die an der Drehachse und dicht benachbart angeordnet sind, einfallendes Licht (einen Laserstrahl) auf einen Innenmantel werfen, der als Reflektor dient und entsprechend einer Involuten gekrümmt ist.

Die Erfindung hat sich zur Aufgabe gesetzt, eine Verzögerungsstrecke zu schaffen, die einen verzögerten auslaufenden Strahl vom ursprünglichen einlaufenden Strahl stets hochexakt trennt und eine hohe Wiederholrate ermöglicht.

Erfindungsgemäß wird dies durch die Merkmale des Hauptanspruches gelöst. Die Unteransprüche geben vorteilhafte Ausführungen der Erfindung wieder.

Insbesondere wird eine Verzögerungsstrecke vorgeschlagen, bei der mit Auskoppelspiegeln und einer rotierenden gekrümmten Spiegelfläche gearbeitet wird, wobei die Außenseite des rotierenden Spiegelkörpers wenigstens zwei voneinander abgesetzte Spiegelflächen bietet, die symmetrisch zu einem Mittelpunkt angeordnet sind, der gleichzeitig Schwer- und Drehpunkt des Reflektors ist.

Dadurch wird eine Unwucht des Reflektors vermieden und dieser kann mit hoher Umdrehungszahl rotieren. Dadurch, dass die Verzögerungsstrecke aus einer symmetrischen Scheibe besteht, deren Mantelfläche verspiegelt ist, kann sie aus poliertem Metall gefertigt werden oder auf einem anderen Material eine kostengünstige reflektierende Schicht aufgetragen werden. Ein senkrecht zu dieser Mantelfläche einfallender Lichtstrahl wird an dieser Spiegelfläche in sich zurückreflektiert, wobei eine geeignete (Zylinder-)Linse zerstreuende Wirkung der gekrümmten Oberfläche kompensiert.

Die Geometrie der Scheibe besitzt die Besonderheit, dass sich der Radius spiralförmig entlang des Azimutwinkels ändert. Das heißt der Abstand des Punktes, an dem der Lichtstrahl reflektiert wird, ist vom Scheibenmittelpunkt her gesehen vom Azimutwinkel abhängig. Damit ist auch der gesamte Lichtweg und folglich die zeitliche Signalposition abhängig.

Die eigentliche zeitliche Verzögerung von optischen Signalen (z. B. kurzer Laserpulse) geschieht dadurch, dass die Scheibe um eine Achse durch ihren Mittelpunkt gedreht wird. Um eine Unwucht zu vermeiden sollte sich pro Umdrehung zwei oder mehrmals der Radius zwischen minimalem und maximalem Wert ändern.

Um den verzögerten (auslaufenden) Strahl vom ursprünglichen (einlaufenden) zu trennen wird wie zuvor ein Strahlteiler eingesetzt.

Ein solcher Strahlteiler kann in einer Alternative der Erfindung dadurch vermieden werden, dass die Mantelfläche des Reflektors mit einer rechtwinkligen Kerbe versehen ist, die dazu dient, den Lichtstrahl mit einem Versatz, jedoch immer noch parallel zur Einfallsrichtung zurück zu reflektieren. Die Ein- und Auskoppelung sowie die Kompensation der Oberflächenkrümmung können dann mit einem entgegengesetzten Frontenspiegelelement erfolgen.

Weitere Vorteile und Merkmale ergeben sich aus einer nachfolgenden Beschreibung eines bevorzugten Ausführungsbeispiels anhand der beigefügten Zeichnungen. Dabei zeigt :

Fig. 1    eine Implementation der optischen Verzögerungsstrecke, wie sie beispielsweise in einem Terahertz-Spektrometer einen einkommenden Laserstrahl über einen teildurchlässigen Spiegel in einen Detektor und einen Emitterteilstrahl aufteilt

Fig. 2    die sich beim Rückreflektieren ergebenden geometrischen Verhältnisse, wobei mit einer gestrichelten Linie der minimale Radius mit einer durchgezogenen Linie der maximale Abstand der Mantelfläche vom Mittelpunkt dargestellt ist,

Fig. 3    eine der Draufsichtdarstellung der Fig. 2 entsprechende Seitenansicht,

Fig. 4    eine alternative Ausführung der Erfindung, in der ein zweites ebenfalls gewölbtes Spiegelelement die in der Kerbe des Reflektors zweimal reflektierte Strahlung entsprechend dem mittleren Radius zunächst defokussiert und entsprechend nach zweimaliger Reflektion wieder zu einem parallelen Strahl fokussiert,

Fig. 5    die geometrischen Verhältnisse der Ausführung der Fig. 4, die ohne einen Strahlteiler betrieben werden kann (in der Seitenansicht dargestellt),

Fig. 6    THz - Wellenformen im Vergleich zwischen Zitteranordnung ("Shaker") und Erfindung (durchgezogene Linie), und

Fig. 7    die der Fig. 6 entsprechenden THz - Spektren im Vergleich.

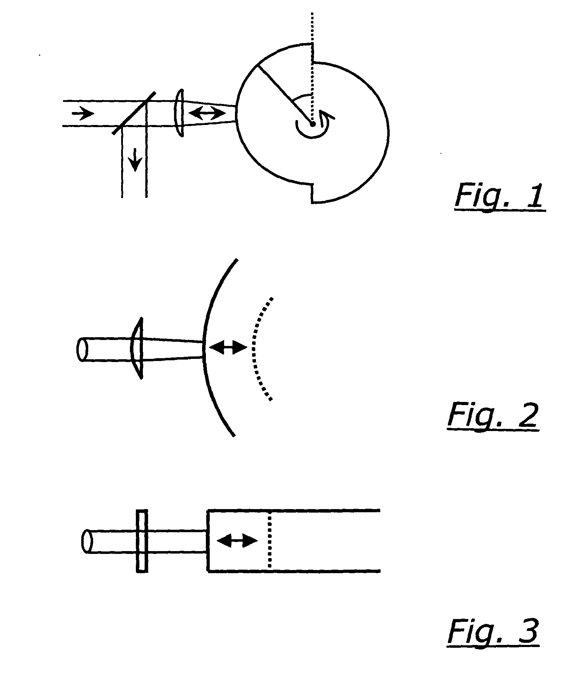

Die in Fig. 1 gezeigte Implementation der optischen Verzögerungsstrecke zeigt in Draufsicht den rotierenden Körper, an dessen Mantelfläche die spiegelnde Fläche in Gestalt einer Spirale mit den kartesischen Koordinaten

$$x = \left( a + \frac{\Delta r}{\pi} \theta \right) \cdot \cos(\theta)$$

$$y = \left( a + \frac{\Delta r}{\pi} \theta \right) \cdot \sin(\theta)$$

wobei a= $r_{min}$ der minimale Radium ist, θ der Azimutwinkel zwischen 0 und Pi, und Δr der Abstand zwischen minimalem und maximalen Radius.

In Fig. 2 sind die sich beim Rückreflektieren ergebenden geometrischen Verhältnisse in Draufsicht dargestellt, wobei mit einer gestrichelten Linie der minimale Radius mit einer durchgezogenen Linie der maximale Radius der nur in einem Sektor gezeigten Mantelfläche vom Mittelpunkt dargestellt ist. In der Fig. 3 wird eine der Draufsichtdarstellung der Fig. 2 entsprechende Seitenansicht dargestellt.

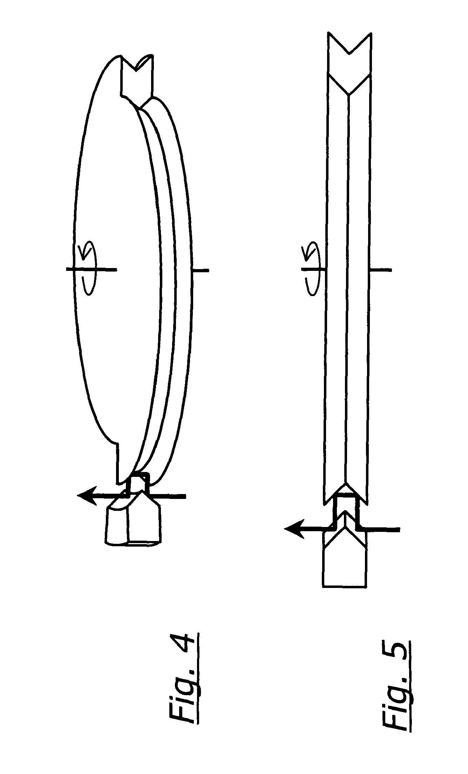

In perspektivischer Darstellung wird in Fig. 4 eine alternative Ausführung der Erfindung gezeigt, in der ein zweites ebenfalls gewölbtes äußeres Spiegelelement die in der Kerbe des Reflektors zweimal reflektierte Strahlung entsprechend dem mittleren Radius zunächst defokussiert und entsprechend nach zweimaliger Reflektion wieder zu einem parallelen Strahl fokussiert. das äußere Spiegelelement kann als der Kerbe nachgeformter Keil bis dicht an die Mantelfläche herangesetzt werden und wird eine Krümmung der Spiegelfläche aufweisen, die der mittleren Krümmung der Mantelflächen, hier der Kerbenwand aufweist.

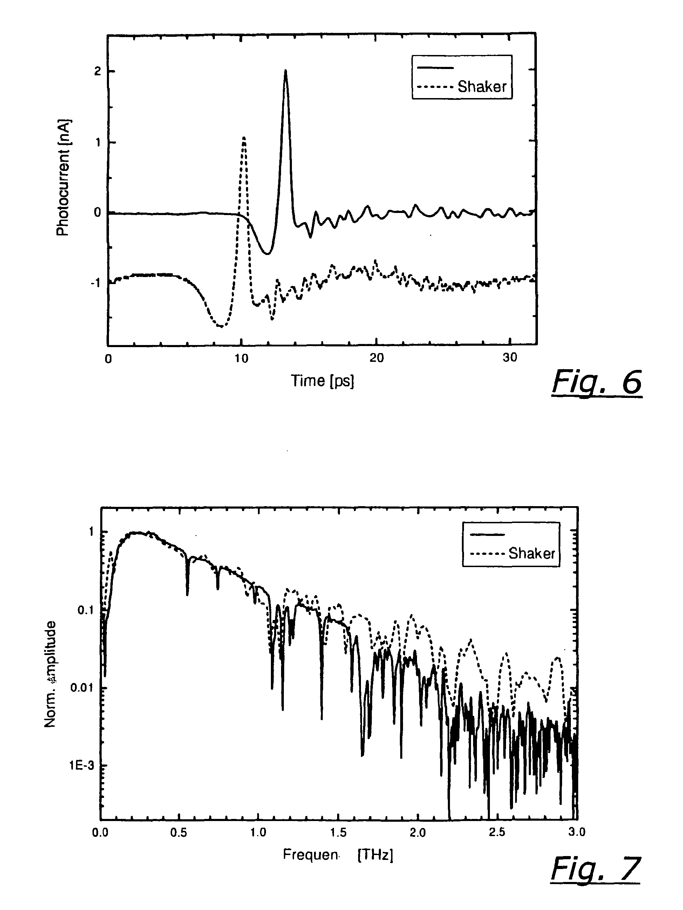

In der Fig. 5 sind die geometrischen Verhältnisse dieser Ausführung, die ohne einen Strahlteiler betrieben werden kann in der Seitenansicht dargestellt. Ein parallel zur Drehachse einfallender Stahl wird vom Keil auf die untere Kerbenseite gerichtet, wobei er parallel zur Drehebene des Spiegelkörpers auf die Drehachse gerichtet ist.

Der Strahl wird dann von der 45 ° geneigten Kerbenwandung zur gegenüberliegenden Wandung reflektiert, läuft also wieder parallel zur Drehachse und wird von dieser zweiten Wandung zurück zum Keil und von diesem weiter z.B. in die erste Einfallsrichtung gerichtet.

In einem getesteten Prototypen wurde a mit 64 mm und Δr mit 16 mm gewählt, das einem Verzögerungsbereich von 106ps bei einer Spiralhöhe von h = 10 mm entspricht.

Um die Funktinalität der Verzögerungsstrecke zu testen, wurde ein 20 Femtosekunden-Titansaphierlaser mit photoleitenden Dipolantennen genutzt und eine lineare Zitteranordnung zum Vergleich herangezogen. In einem Vergleich der beiden Verzögerungsstrecken wurde festgestellt, dass bei einem Betrieb dieser linearen Zitteranordnung eine Frequenz von 4 Hz der maximal erreichbare Wert ist, während das Abtasten der Spiralverzögerungsstrecke ohne weiters bei 30 Hz möglich ist. Bei schnelleren Motoren sind auch ohne weiteres kürzere Abtastraten möglich. Die Fig. 6 und 7 zeigen die Terahertz-Wellenformen und die entsprechenden Spektren, die erzeugt wurden.

Das Signal-Rauschenverhältnis ist deutlich besser und im übrigen ist für die Spirale keine Korrektion für die nicht-lineare Verzögerung notwendig.

**Patentansprüche**

1. Verzögerungsstrecke für optische Signale mit Auskoppelspiegeln und einer rotierenden gekrümmten Spiegelfläche, die einer Spiralkrümmung folgend an einer durch die Drehung sich ändernden Azimutposition den Laserstrahl reflektiert, **dadurch gekennzeichnet, daß**

   - die Außenseite eines rotierenden Spiegelkörpers wenigstens zwei Spiegelflächen bietet,
   - wobei die Teilflächen symmetrisch zu einem Mittelpunkt angeordnet sind, der Schwer- und Drehpunkt des Reflektors ist und
   - jede Teilfläche mit einem sich ändernden Radius beginnend bei einem Minimalradius und maximal einen Maximalradius erreichend versehen ist.

2. Verzögerungsstrecke nach Anspruch 1, **dadurch gekennzeichnet, daß** neben dem Spiegelkörper, der mit einer Kerbe an der Mantelfläche versehen ist, zur Reflexion eines Einfallsstrahls auf und zum Empfang reflektierter Strahlung von der jeweiligen Kerbenwandung der Mantelfläche ein Spiegelkeil vorgesehen ist.

3. Verzögerungsstrecke nach Anspruch 2, **dadurch gekennzeichnet, daß** der Spiegelkeil mit zwei gewölbten Spiegelflächen zur fokussierenden Reflexion eines Einfallsstrahls auf und Empfang reflektierter Strahlung von der jeweiligen im Mittel gleich gewölbten Kerbenwandung der Mantelfläche.

_Fig. 1_

_Fig. 2_

_Fig. 3_

_Fig. 4_

_Fig. 5_

*Fig. 6*

*Fig. 7*

**Europäisches Patentamt**

## EUROPÄISCHER RECHERCHENBERICHT

Nummer der Anmeldung

EP 06 00 4678

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 262 889 A (FINK ET AL) 16. November 1993 (1993-11-16) * Spalte 5, Zeile 13 - Spalte 6, Zeile 14; Abbildungen 9,10 * ----- | 1-3 | INV. G02B5/10 G02B5/09 G02B26/06 |
| X | US 3 776 637 A (HECHT R,US) 4. Dezember 1973 (1973-12-04) * Spalte 2, Zeile 24 - Zeile 50; Abbildung 6 * ----- | 1-3 | |
| A | US 5 264 971 A (LAMMERS ET AL) 23. November 1993 (1993-11-23) * Spalte 6, Zeile 18 - Zeile 32; Abbildungen 6-10 * ----- | 2,3 | |
| P,A | WO 2005/088371 A (RENSSELAER POLYTECHNIC INSTITUTE; XU, JINGZHOU; ZHANG, XI-CHENG) 22. September 2005 (2005-09-22) * Abbildung 4 * ----- | 1-3 | |

RECHERCHIERTE SACHGEBIETE (IPC)

G02B

Der vorliegende Recherchenbericht wurde für alle Patentansprüche erstellt

| Recherchenort | Abschlußdatum der Recherche | Prüfer |
|---|---|---|
| München | 16. Mai 2006 | Rödig, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 00 4678

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-05-2006

| Im Recherchenbericht angeführtes Patentdokument | Datum der Veröffentlichung | Mitglied(er) der Patentfamilie | Datum der Veröffentlichung |
|---|---|---|---|
| US 5262889 A | 16-11-1993 | KEINE | |
| US 3776637 A | 04-12-1973 | KEINE | |
| US 5264971 A | 23-11-1993 | KEINE | |
| WO 2005088371 A | 22-09-2005 | KEINE | |

EPO FORM P0461

Für nähere Einzelheiten zu diesem Anhang : siehe Amtsblatt des Europäischen Patentamts, Nr.12/82

EP 1 701 181 A1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **DR. MARTIN KOCH.** Quantenschwebungs-Spektroskopie an exzitonischen Übergängen in Halbleiter-Heterostrukturen. Cuvillier Verlag, 1995

- **JINGZHOU XU ; X.-C. ZHANG.** Circular involute stage. *Opt.Lett.,* 2004, vol. 29, 2082-2084